# EUROPEAN PATENT SPECIFICATION

(11) **EP 3 127 792 B1**
(45) Date of publication and mention of the grant of the patent: **18.04.2018**
(21) Application number: 16176141.6
(22) Date of filing: 24.06.2016
(51) Int. Cl.: B60R 25/24, B62H 5/00

(54) **STRADDLED-VEHICLE AUTHENTICATION SYSTEM AND STRADDLED VEHICLE**
GRÄTSCHSITZAUTHENTIFIZIERUNGSSYSTEM UND GRÄTSCHSITZFAHRZEUG
SYSTÈME D'AUTHENTIFICATION DE VÉHICULE MONTÉ À CALIFOURCHON ET UN TEL VÉHICULE

(30) Priority: 09.07.2015 JP 2015137594
(43) Date of publication of application: 08.02.2017
(73) Proprietor: Yamaha Hatsudoki Kabushiki Kaisha, Iwata-shi, Shizuoka 438-8501 (JP)
(72) Inventor: Maekawa, Koji, Iwata-shi, Shizuoka 438-8501 (JP); Ikeda, Takeshi, Iwata-shi, Shizuoka 438-8501 (JP)
(74) Representative: Zimmermann, Tankred Klaus

(56) References cited:
- EP-A1- 1 547 912
- EP-A1- 1 591 329
- EP-A1- 2 055 874
- DE-A1- 10 125 064
- JP-A- H06 305 464
- JP-A- 2008 230 293
- JP-A- 2015 134 592
- US-A1- 2004 090 306
- US-A1- 2006 238 296
- US-A1- 2007 214 849
- US-A1- 2007 247 280
- US-B2- 7 317 262

## Description

### [TECHNICAL FIELD]

The present invention relates to a straddled-vehicle authentication system and a straddled vehicle.

### [BACKGROUND ART]

For example, JP 2008-230293 A discloses a motorcycle including a smart key system. The smart key system is configured to, in response to pushing of a main switch provided in the motorcycle, check whether or not an ID code supplied from a portable transmitter matches a vehicle code. Upon matching of them, a main power source is turned on, and an engine is enabled to start. In this state, locking of a fuel lid is released in response to a press-and-hold operation applied to a switch provided in the motorcycle which is different from the main switch, and a seat lock is released in response to short pushing of this switch.

### [SUMMARY OF THE INVENTION]

### [OBJECT]

An object of the present invention is to provide a straddled-vehicle authentication system and a straddled vehicle that achieve a suppression of an increase in power consumption while maintaining security, and also achieve a suppression of an increase in the size of the straddled vehicle which may result from an increase in the size of a battery.

This object is achieved by a straddled-vehicle authentication system and a straddled vehicle as defined in the independent claims.

### [PROBLEMS TO BE SOLVED BY THE INVENTION]

The smart key system disclosed in JP 2008-230293 A enables an authentication system using a portable device to be adopted for a straddled vehicle having switches exposed to the outside, so that security is enhanced. In general, the more frequently an authentication is performed between the straddled vehicle and the portable device, the more the security is improved. The smart key system disclosed in JP 2008-230293 A uses power from a battery mounted in the straddled vehicle. This is why the straddled vehicle equipped with the smart key system consumes more power from the battery. In straddled vehicles typified by motorcycles, a battery occupies a large proportion to the size and weight of a vehicle body, and therefore minimizing the capacity of the battery is desired. Mounting the smart key system to the straddled vehicle, however, leads to increased power consumption, which requires an increased capacity of the battery. An increase in the size of the battery results in a problem with an increase in the size of the straddled vehicle. Further prior art is known from EP 1 547 912 A1.

### [MEANS FOR SOLVING THE PROBLEMS]

To solve the problems described above, the present invention can adopt the following configurations.
(1) A straddled-vehicle authentication system including:
   a power unit control unit configured to control a power unit, the power unit control unit provided in a straddled vehicle, the power unit provided in the straddled vehicle and configured to drive the straddled vehicle;
   a portable device configured to be used for an authentication to use the straddled vehicle via a wireless communication, the portable device being physically separate from the straddled vehicle;
   an authentication control unit configured to perform the authentication to use the straddled vehicle by communicating with the portable device, the authentication control unit provided in the straddled vehicle;
   a main operation part configured to receive an operation for switching the state of the authentication system to any of at least an OFF state, an authentication verified state, and a power-unit ON state, wherein
      the main operation part is provided in the straddled vehicle,
      the OFF state is a state in which a power source of the power unit control unit is off and the authentication via the wireless communication between the authentication control unit and the portable device is not performed,
      the authentication verified state is a state in which the power source of the power unit control unit is off and the authentication via the wireless communication between the authentication control unit and the portable device has been performed,
      the power-unit ON state is a state in which the power source of the power unit control unit is on and the authentication via the wireless communication between the authentication control unit and the portable device has been performed; and
   an unauthorized access prevention unit configured to perform a process for preventing an unauthorized access to the straddled vehicle in accordance with at least either one of an elapsed time in the authentication verified state and a status of the authentication performed by the authentication control unit in the authentication verified state. The main operation part is configured to display the state of the authentication system by means of a physical displacement of the main operation part caused by an operation applied to the main operation part. The authentication system displays the state of the authentication system by means of a physical displacement of the main operation part caused by an operation applied to the main operation part. Accordingly, a person positioned so as to have visual recognition of the main operation part of the straddled vehicle is able to recognize the state of the authentication system, without consuming power. This suppresses or avoids an increase in power consumption while maintaining security.

   The authentication system of (1) has the authentication verified state in addition to the OFF state and the power-unit ON state. In the authentication verified state, the power source of the power unit control unit is off. The straddled vehicle is therefore not able to travel. In the authentication verified state, a device engaged in operations of the power unit can be powered off. In the authentication verified state, the authentication via a communication between the authentication control unit and the portable device has been already performed. The user is therefore allowed to take actions on the straddled vehicle. The authentication system of (1) enables the user to take actions on the straddled vehicle while saving power consumption associated with the power unit in the authentication verified state. In the authentication verified state, furthermore, the unauthorized access prevention unit performs the process for preventing an unauthorized access in accordance with at least either one of the elapsed time and the authentication status. After the authentication, security is maintained even if the process for preventing an unauthorized access is performed during a limited time period or under limited circumstances, as will be described later. Since the time period or circumstances in which the process for preventing an unauthorized access is performed are limited, power consumption is saved. Accordingly, the authentication system of (1) suppresses or avoids an increase in power consumption while maintaining security.
(2) The straddled-vehicle authentication system according to (1), wherein
   the authentication control unit is configured to perform the authentication by communicating with the portable device independently of an operation applied to the main operation part in the authentication verified state,
   the unauthorized access prevention unit is configured to perform the process for preventing an unauthorized access to the straddled vehicle in accordance with at least the status of the authentication performed by the authentication control unit in the authentication verified state.
   In the authentication system of (2), the authentication control unit performs the authentication by communicating with the portable device independently of an operation made to the main operation part in the authentication verified state. In this manner, whether or not the user carrying the portable device has left the straddled vehicle is determined in the authentication verified state. The unauthorized access prevention unit performs the process for preventing an unauthorized access to the straddled vehicle in accordance with at least the status of the authentication performed by the authentication control unit in the authentication verified state. If the determination is that the user has left the straddled vehicle, the process for preventing an unauthorized access is performed.
   It is less likely that an unauthorized access occurs when the user is near the straddled vehicle. Therefore, security is maintained by performing the process for preventing an unauthorized access in a situation where the user is leaving the straddled vehicle. Since the process for preventing an unauthorized access is performed under limited circumstances, power consumption is saved. This suppresses or avoids an increase in power consumption while maintaining security.
(3) The straddled-vehicle authentication system according to (1) or (2), wherein
   the authentication control unit is configured to repeatedly perform the authentication by communicating with the portable device in the authentication verified state,
   the unauthorized access prevention unit is configured to perform the process for preventing an unauthorized access to the straddled vehicle in accordance with at least the status of the authentication performed by the authentication control unit in the authentication verified state.
   The authentication system of (3) repeats the authentication in the authentication verified state. Even when a prolonged time has elapsed since the state of the authentication system was switched to the authentication verified state, the process for preventing an unauthorized access is performed when the user is leaving the straddled vehicle, so that security is maintained. Since the process for preventing an unauthorized access is performed under limited circumstances, power consumption is saved. This suppresses or avoids an increase in power consumption while maintaining security.
(4) The straddled-vehicle authentication system according to (1), wherein
   the unauthorized access prevention unit is configured to perform the process for preventing an unauthorized access to the straddled vehicle in accordance with the elapsed time in the authentication verified state and independently of the status of the authentication.
   Immediately after the state of the authentication system is switched to the authentication verified state, the user is expected to take actions on the straddled vehicle with a high probability. Therefore, the probability of an occurrence of an unauthorized access by a third party is low, and the need to perform the process for preventing an unauthorized access is reduced. The elapsed time in the authentication verified state is related to the necessity of the process for preventing an unauthorized access. The configuration of (4) can ensure security by performing the process for preventing an unauthorized access in accordance with the elapsed time in the authentication verified state. Since the process for preventing an unauthorized access is performed during a limited time period, power consumption is saved. This suppresses or avoids of an increase in power consumption while maintaining security.
(5) The straddled-vehicle authentication system according to (1), wherein
   the authentication control unit is configured not to perform the authentication in the authentication verified state when the main operation part is not operated.
   The configuration of (5) performs the process for preventing an unauthorized access in accordance with the elapsed time in the authentication verified state. Thus, the process for preventing an unauthorized access can be performed even when the authentication is not performed. This further suppresses or avoids an increase in power consumption while maintaining security.
(6) The straddled-vehicle authentication system according to any one of (1) to (5), wherein
   the unauthorized access prevention unit is configured to perform a process for presenting visual or auditory information, as the process for preventing an unauthorized access to the straddled vehicle.
   In the configuration of (6), the unauthorized access prevention unit presents information. In the authentication verified state, security is maintained even if the information is presented during a limited time period or under limited circumstances. Since the information is presented during a. limited time period or under limited circumstances, power consumption is saved. This further suppresses or avoids of an increase in power consumption while maintaining security.
(7) The straddled-vehicle authentication system according to any one of (1) to (5), wherein
   the unauthorized access prevention unit is configured to perform a process for blocking an access to a part of the straddled vehicle that has been made accessible after the authentication, as the process for preventing an unauthorized access to the straddled vehicle.
   In the configuration of (7), the unauthorized access prevention unit blocks an access. In the authentication verified state, security is maintained even if blocking the access is performed during a limited time period or under limited circumstances. Since blocking the access is performed during a limited time period or under limited circumstances, power consumption is saved. This further suppresses or avoids of an increase in power consumption while maintaining security.
(8) The straddled-vehicle authentication system according to (7), wherein a part of the straddled vehicle is an open/close part provided in the straddled vehicle,
   the open/close part is configured to allow the straddled vehicle to be accessed through the open/close part when the open/close part is opened, the open/close part being openable in the authentication verified state and not openable in the OFF state and in the power-unit ON state.
   The configuration of (8) suppresses or avoids an increase in power consumption while ensuring security against an unauthorized access to the open/close part.
(9) A straddled vehicle including:
   a power unit that drives the straddled vehicle; and the straddled-vehicle authentication system according to any one of (1) to (8).

The straddled vehicle of (9) suppresses or avoids an increase in power consumption while maintaining security.

### [EFFECTS OF THE INVENTION]

The straddled-vehicle authentication system of the present invention achieves suppression of an increase in power consumption while maintaining security, and also achieves suppression of an increase in the size of the straddled vehicle which may result from an increase in the size of a battery.

### [BRIEF DESCRIPTION OF THE DRAWINGS]

[Fig. 1] Fig. 1 is a side view schematically showing a straddled vehicle 10 equipped with a straddled-vehicle authentication system C according to a first embodiment.
[Fig. 2] Fig. 2 is a front view schematically showing an external appearance of an operation unit according to the first embodiment. [Fig. 3] Fig. 3 is a block diagram schematically showing a configuration of the straddled-vehicle authentication system C according to the first embodiment. [Fig. 4]
Fig. 4 is a state transition diagram illustrating the states of the straddled-vehicle authentication system C according to the first embodiment.
[Fig. 5]

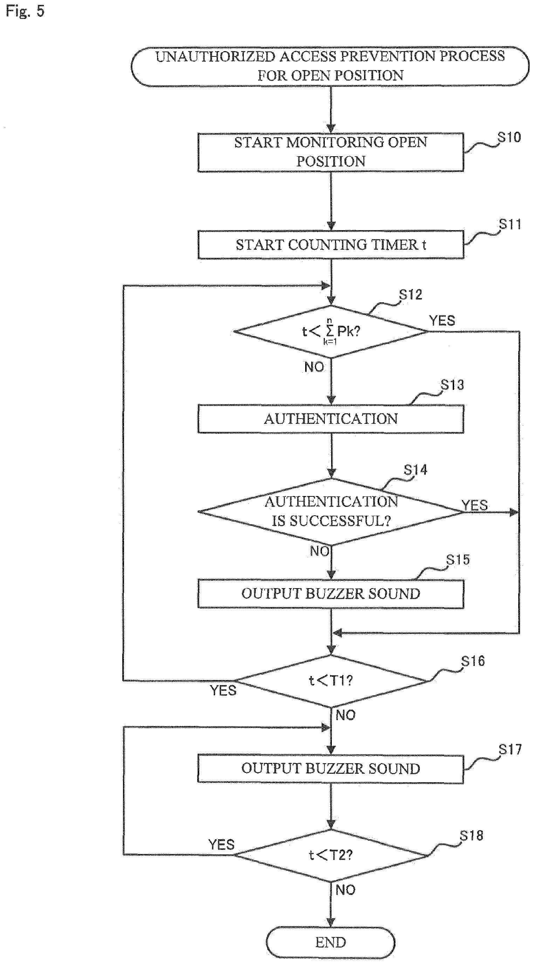

   Fig. 5 is a flowchart of an unauthorized access prevention process that is performed in the straddled-vehicle authentication system C according to the first embodiment, when a main operation part of the operation unit is in the OPEN position.
[Fig. 6]

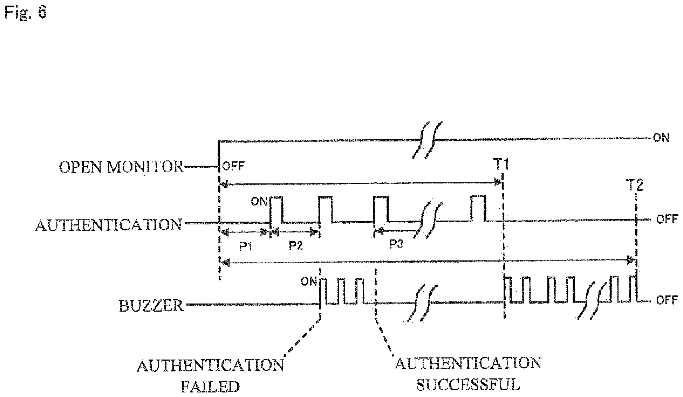

   Fig. 6 is a timing chart of the unauthorized access prevention process that is performed in the straddled-vehicle authentication system C according to the first embodiment, when a main operation part of the operation unit is in the OPEN position.
[Fig. 7]

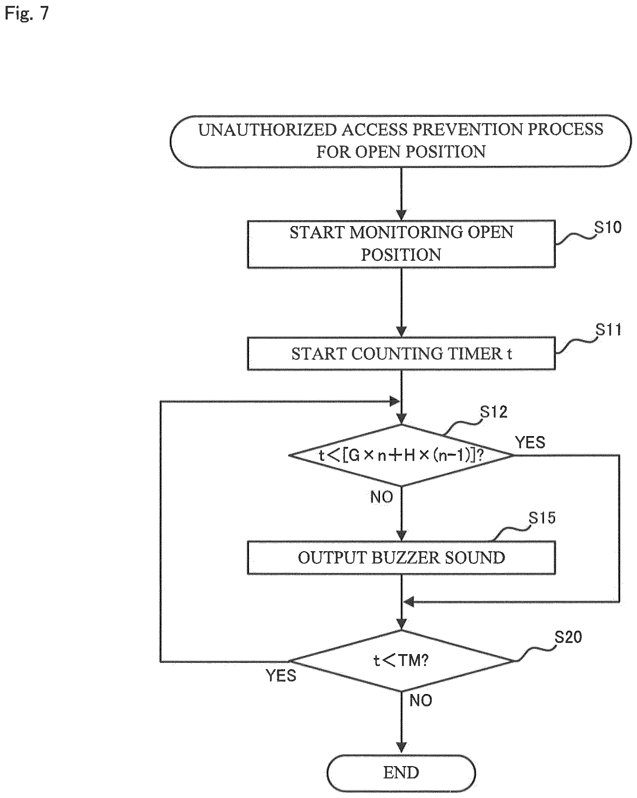

   Fig. 7 is a flowchart of an unauthorized access prevention process that is performed in a straddled-vehicle authentication system C according to a second embodiment, , when a main operation part of the operation unit is in the OPEN position.
[Fig. 8]

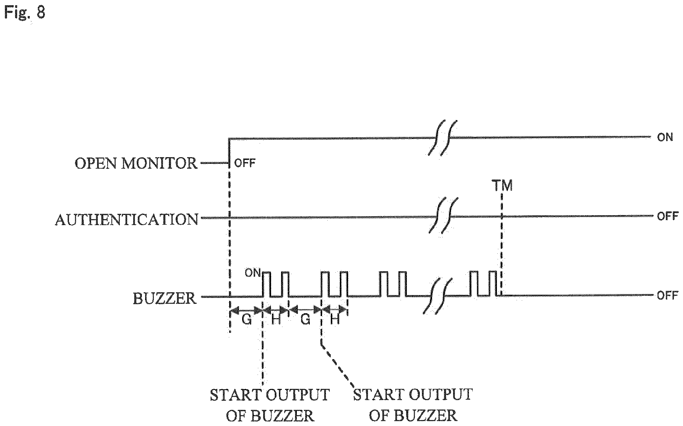

   Fig. 8 is a timing chart of the unauthorized access prevention process that is performed in the straddled-vehicle authentication system C according to the second embodiment, when a main operation part of the operation unit is in the OPEN position.

### [EMBODIMENTS FOR CARRYING OUT THE INVENTION]

Studies carried out by the present inventors on a straddled-vehicle authentication system for use in a straddled vehicle will be described.

Examples of the straddled-vehicle authentication system that achieves less power consumption include an authentication system having the following configuration. The authentication system includes a power unit control unit, a portable device, an authentication control unit, and a main operation part. The power unit control unit is provided in a straddled vehicle so as to control the power unit for driving the straddled vehicle. The portable device, which is physically separate from the straddled vehicle, is used in an authentication to use the straddled vehicle via wireless communication. The authentication control unit, which is provided in the straddled vehicle, is configured to perform the authentication to use the straddled vehicle by communicating with the portable device carried by a user. The main operation part is operable so as to switch the state of the authentication system to any of an OFF state, an authentication verified state, and a power-unit ON state.

The OFF state is a state in which a power source of the power unit control unit is off and the authentication via a communication between the authentication control unit and the portable device is not performed. The authentication verified state is a state in which the power source of the power unit control unit is off and the authentication via a communication between the authentication control unit and the portable device has been performed. The power-unit ON state is a state in which the power source of the power unit control unit is on and the authentication via a communication between the authentication control unit and the portable device has been performed.

In the straddled vehicle equipped with such an authentication system, the authentication between the authentication control unit and the portable device is performed in response to the user operating the main operation part in a state where the authentication system is in the OFF state. In response to a successful authentication, the authentication system is switched into the authentication verified state. The authentication verified state enables the user to select, for example, whether to apply a further operation to the main operation part or to operate a fuel lid button or a seat open button. Applying the further operation to the main operation part results in a switching of the authentication system into the power-unit ON state. In the power-unit ON state, the power source of the power unit control unit is on, and the authentication has been completed. The user is therefore able to actuate the power unit. Traveling is enabled accordingly. On the other hand, operating the fuel lid button results in release of the fuel lid lock. This makes a fuel lid openable. Fueling is therefore enabled. Operating the seat open button results in a release of the seat lock. This enables to put-in and to take-out luggage, a helmet, and the like. In the straddled vehicle of this type, actions such as refueling, put-in and take-out of luggage, or the like, can be performed in a state where the authentication has been successful and additionally the power source of the power unit control unit is off. This reduces power consumption caused by the power unit control unit and devices engaged in operations of the power unit during the actions.

In the authentication system using the portable device, in general, the frequency at which the user uses the portable device and the length of time during which the user operates the portable device are less than those of a system using a physical key. This is why the user may occasionally forget that he carries the device. Moreover, in general, the user can more readily move away from the straddled vehicle than from an automobile including a vehicle cabin and a door. This causes a risk that the user may be too distracted by the fueling or the luggage to keep in mind that the lock has been released after the authentication performed by the authentication system. The user, therefore, may leave the straddled vehicle while carrying the portable device. If the user leaves the straddled vehicle with the lock released, a third party can undesirably gain an unauthorized access such as tampering to the straddled vehicle. There is a risk of degradation of security. If the user leaves the straddled vehicle with an open/close part such as a seat or a fuel lid opened, for example, a lamp arranged in a seat box can undesirably remain lighted. Thus, there is a risk that a device or equipment may be continuously in operation which leads to an increased power consumption. Thus, the above-described authentication system leaves room for improvement from the viewpoint of both ensuring security and achieving less power consumption.

The present inventors conducted further studies, and found out the following.

Whether or not the user has left the straddled vehicle while carrying the portable device after authentication can be determined by using the authentication system. Accordingly, a process for preventing an unauthorized access to the straddled vehicle while the user leaves the straddled vehicle after authentication can be performed by using the authentication system. Performing the process for preventing an unauthorized access under limited circumstances after authentication provides both security and less power consumption.

For example, immediately after the open/close part is opened, the user is near the straddled vehicle with a high probability. Immediately after the open/close part is opened, the user is expected with a high probability to take an action that has been enabled by the release of the open/close part. The user is less likely to leave the straddled vehicle immediately after the open/close part is opened, so that the need is reduced to continuously perform the process for preventing an unauthorized access to the straddled vehicle following the authentication. The time elapsed since the authentication is related to the necessity of the process for preventing an unauthorized access to the straddled vehicle following the authentication. Accordingly, performing the process for preventing an unauthorized access to the straddled vehicle after authentication based on the time elapsed since the authentication ensures security as well as a reduced power consumption.

The process for preventing an unauthorized access to the straddled vehicle after authentication does not always have to be performed at all times after the authentication. After the authentication, as described above, security can be maintained even though the process for preventing an unauthorized access is performed only during a limited time period or under limited circumstances. Since the time period or circumstances are limited, the power consumption can be reduced. As a result, both maintaining security and reducing power consumption are obtained. The present invention has been accomplished based on the findings as thus far described.

The conventional straddled-vehicle authentication systems are different from the straddled-vehicle authentication system according to the present invention in terms of use of the authentication system. The difference is, for example, as follows. Some of the conventional straddled-vehicle authentication systems are configured such that, when a portable device falls down while the straddled vehicle is traveling, the authentication system is used to inform the user that the portable device has fallen down. The straddled vehicle is normally not provided with a vehicle cabin and a door. The straddled vehicle, therefore, is more likely to suffer a problem that a portable device is fallen down and lost than automobiles. The conventional straddled-vehicle authentication system mentioned above is a system for solving such a problem. To be specific, the conventional straddled-vehicle authentication system described above aims to prevent the portable device from being lost by alerting the user as soon as possible in a situation where the portable device is out of range from the straddled vehicle while the user is near the straddled vehicle. On the other hand, the present invention permits actions such as fueling to be taken on the straddled vehicle while keeping the power source of the power unit turned off after authentication. This reduces power consumption associated with the power unit. The present invention uses the authentication system to reduce the likelihood that the user will inadvertently leave the vehicle after performing authentication of the straddled vehicle. Accordingly, the security can be ensured while less power consumption is obtained. The straddled-vehicle authentication system according to the present invention is an invention that the present inventors have accomplished based on a new concept different from the conventional straddled-vehicle authentication systems.

Hereunder, the present invention will be described based on preferred embodiments with reference to the drawings.

### <First Embodiment>

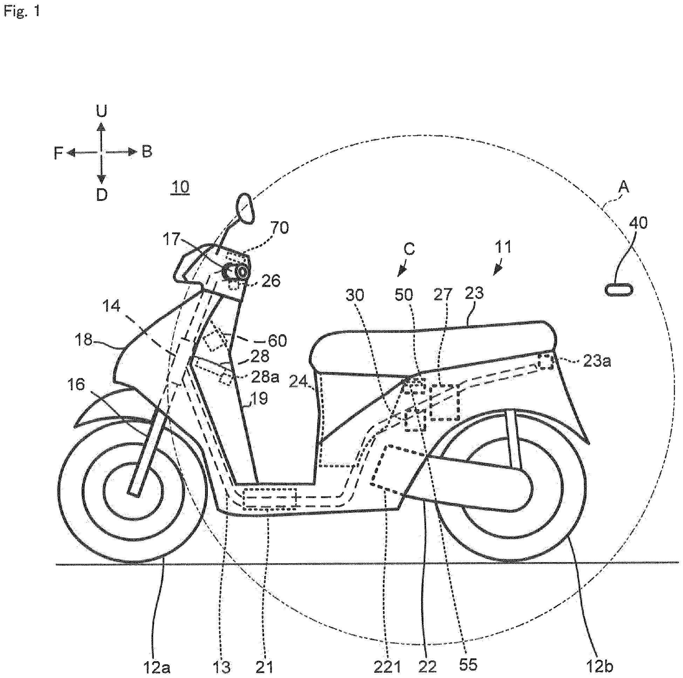

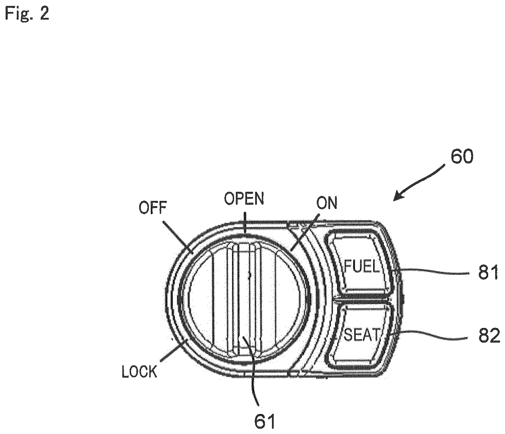

Fig. 1 is a side view schematically showing a straddled vehicle 10 equipped with a straddled-vehicle authentication system C according to a first embodiment. Fig. 2 is a front view schematically showing an external appearance of an operation unit 60 according to the first embodiment. In Fig. 1, the arrow F indicates a forward direction of the straddled vehicle 10. The arrow B indicates a backward direction. The arrow U indicates an upward direction. The arrow D indicates a downward direction.

The straddled vehicle 10 shown in Fig. 1 is a motorcycle. The straddled vehicle 10 includes a vehicle body 11 and two wheels 12a, 12b. The vehicle body 11 has a vehicle body frame 13 provided with a head pipe 14. The head pipe 14 supports a front fork 16. The front fork 16 rotatably supports the front wheel 12a. The front fork 16 is supported by the head pipe 14 so as to be steerable through handlebars 17 that are arranged above the head pipe. A front cover 18 for covering a front part of the head pipe 14 is provided in front of the head pipe 14. A leg cover 19 for covering a rear part of the head pipe 14 is provided in the rear of the head pipe 14.

The leg cover 19 has a fuel lid 28 for access to a fuel filler opening (not shown) of a fuel tank 21. The fuel lid 28 provided in the leg cover 19 is openable and closable. The leg cover 19 has a lid lock 28a for locking the fuel lid 28. The fuel lid 28 is openable when the lid lock 28a is unlocked.

The straddled vehicle 10 includes a power unit 22 and a battery 27. The power unit 22 includes an engine 221. The power unit 22 supports the rear wheel 12b. The power unit 22 drives the rear wheel 12b, to drive the straddled vehicle 10. One of the handlebars 17 has a start switch 26 for starting the engine 221.

The vehicle body 11 of the straddled vehicle 10 includes a seat 23 on which a rider is seated. A storage compartment 24 is provided under the seat 23. The seat 23 is supported by the vehicle body 11 in an openable and closable manner. The vehicle body 11 of the straddled vehicle 10 has a seat lock 23a for locking the seat 23. When the seat lock 23a is unlocked, the seat 23 is openable to allow access to the inside of the storage compartment 24. The seat 23 and the fuel lid 28 correspond to one example of an open/close part provided in the straddled vehicle 10. The open/close part is not limited to this example and may be, for example, a cover of a glovebox.

The straddled vehicle 10 includes the straddled-vehicle authentication system C. The straddled-vehicle authentication system C includes a power unit control unit 30, a portable device 40, an authentication control unit 50, an operation unit 60, and an unauthorized access prevention unit 70.

The power unit control unit 30 is provided in the straddled vehicle 10. The power unit control unit 30 controls the power unit 22. The power unit control unit 30 controls a fuel injection and an ignition timing of the engine 221. The power unit control unit 30 also controls, for example, an operation of a fuel pump (not shown) that supplies a fuel to the engine 221.

The portable device 40 is physically separate from the straddled vehicle 10. The portable device 40 is physically separate from the vehicle body 11. The portable device 40 is normally carried by the rider of the straddled vehicle 10. The portable device 40 is used in the authentication to use the straddled vehicle 10. Upon reception of a request signal from the outside of the portable device 40, the portable device 40 transmits a response signal. When the portable device 40 is in a communication range A, the portable device 40 communicates with the authentication control unit 50. When the portable device 40 is out of the communication range A, the portable device 40 does not communicate with the authentication control unit 50.

The authentication control unit 50 is provided in the straddled vehicle 10. The authentication control unit 50 communicates with the portable device 40, to perform an authentication verifying operation to use the straddled vehicle 10. The authentication control unit 50 wirelessly transmits the request signal to the portable device 40 located in the communication range A. When the portable device 40 is in the communication range A, the authentication control unit 50 is able to perform authentication by communicating with the portable device 40. When the portable device 40 is out of the communication range A, the authentication control unit 50 is not able to perform authentication by communicating with the portable device 40. The authentication control unit 50 is arranged adjacent to the storage compartment 24. For example, even when the rider puts the portable device 40 as well as the other luggage into the storage compartment 24, the ability of the authentication control unit 50 to communicate with the portable device 40 is ensured.

As for the communication range A, in this embodiment, the distance over which the authentication control unit 50 is able to transmit a signal is set shorter than the distance over which the portable device 40 is able to transmit a signal. When the portable device 40 is within a range that enables the portable device 40 to receive a signal used for authentication from the authentication control unit 50, the authentication control unit 50 is able to transmit the signal used for authentication to the portable device 40. In this embodiment, therefore, the communication range A is substantially equal to a range that enables the authentication control unit 50 to transmit a signal to the portable device 40.

The operation unit 60 receives operations from the rider. Based on the operations received by the operation unit 60, the straddled vehicle 10 operates various parts of the straddled vehicle 10 or switches the state of the straddled vehicle 10. The operation unit 60 is provided in the straddled vehicle 10. The operation unit 60 is arranged inside the leg cover 19 provided in the rear of the head pipe 14. The operation unit 60 is partially exposed to the outside of the leg cover 19.

As shown in Fig. 2, the operation unit 60 includes a main operation part 61 and sub operation parts 81, 82. The main operation part 61 and the sub operation parts 81, 82 receive operations for switching the state of the straddled vehicle 10. The main operation part 61 receives operations for switching the state of the straddled-vehicle authentication system C. The main operation part 61 receives operations for switching the states of the power unit control unit 30 and the authentication control unit 50.

The main operation part 61 is configured to receive a pressing operation or a rotation operation. As shown in Fig. 2, the main operation part 61 is surrounded by signs of "LOCK", "OFF", "OPEN", and "ON". An operation made to the main operation part 61 causes a physical displacement of the main operation part 61. As a result, the main operation part 61 indicates any of the signs. In Fig. 2, the main operation part 61 indicates "OPEN". Each of the signs represents a state of the authentication system C. Thus, the main operation part 61 displays the state of the authentication system C. Since the display of the state of the authentication system C is implemented through the physical displacement of the main operation part 61, power consumption is saved. The physical displacement of the main operation part 61 is detected by any of a plurality of switches (not shown) provided in the main operation part 61. The switch having detected the physical displacement of the main operation part 61 transmits a signal to the authentication control unit 50. In this manner, the physical displacement of the main operation part 61 is conveyed to the authentication control unit 50.

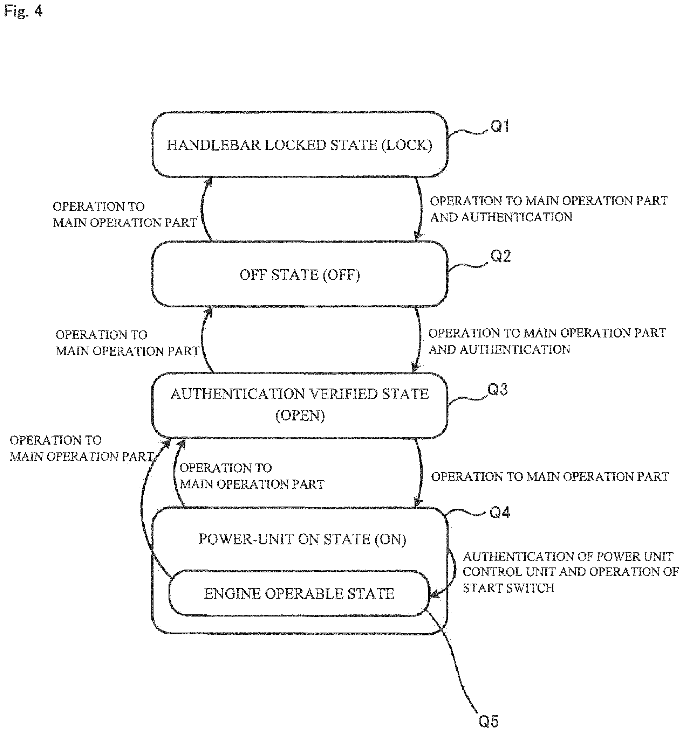

The sign of "LOCK" corresponds to a handlebar locked state Q1. The sign of "OFF" corresponds to an OFF state Q2. The sign of "OPEN" corresponds to an authentication verified state Q3. The sign of "ON" corresponds to a power-unit ON state Q4. In the handlebar locked state Q1, the power source of the power unit control unit 30 is off, and no authentication is performed by the authentication control unit 50. Therefore, the handlebar locked state Q1 is included in the OFF state Q2. The handlebar locked state Q1 is a state in which the handlebars 17 are locked under the OFF state Q2. Each of the states will be detailed with reference to Fig. 4.

The sub operation parts 81, 82 receive operations for opening the fuel lid 28 and the seat 23 provided in the straddled vehicle 10. The sub operation parts 81, 82 are push buttons that are pushed by receiving a load produced by a pushing operation. The sub operation parts 81, 82 are connected to the lid lock 28a and the seat lock 23a, respectively, by wires (not shown) for transmitting a displacement of the sub operation parts 81, 82. As a result of the displacement of the sub operation parts 81, 82 caused by a load application operation, the lid lock 28a and the seat lock 23a (see Fig. 1) are unlocked. The operation unit 60 has a handlebar locking function for blocking the handlebars 17 against rotation.

In this embodiment, the unauthorized access prevention unit 70 is implemented as an electronic buzzer. The unauthorized access prevention unit 70 is provided in the middle of the handlebars 17 with respect to the vehicle width direction. The unauthorized access prevention unit 70 outputs a buzzer sound if, for example, an authentication performed by the authentication system C in the authentication verified state Q3 failed. By the buzzer sound, the unauthorized access prevention unit 70 informs the user that the seat 23 and the fuel lid 28 of the straddled vehicle 10 are accessible after the authentication, thereby reducing the occurrence of a situation in which the user leaves the straddled vehicle 10 with the seat 23 and the fuel lid 28 unlocked. As a result, occurrence of an unauthorized access to the straddled vehicle 10 by a third party is reduced. The unauthorized access is an access not intended by the user. The unauthorized access is, for example, an access made by a third party not having the portable device 40. The position where the unauthorized access prevention unit 70 is installed is not particularly limited. For example, the unauthorized access prevention unit 70 may be installed near the authentication control unit 50, near the operation unit 60, and the like.

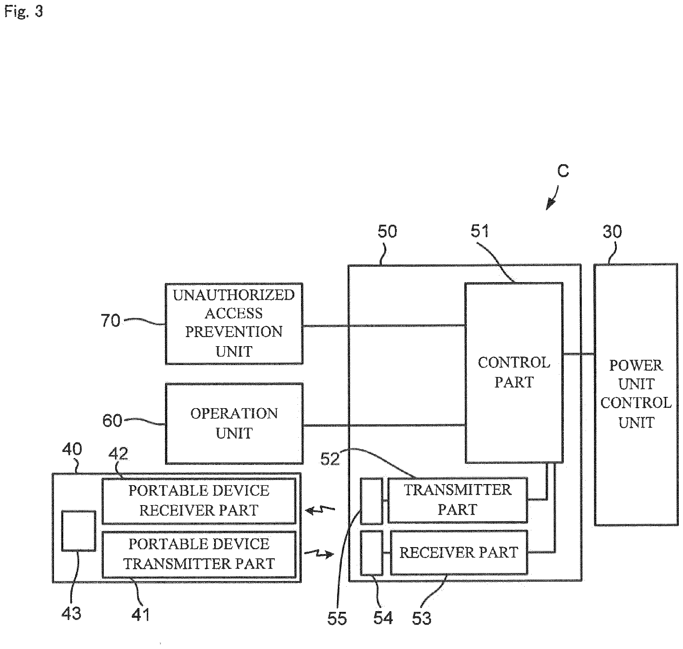

Fig. 3 is a block diagram schematically showing a configuration of the straddled-vehicle authentication system C according to the first embodiment.

The authentication control unit 50 includes a control part 51, a transmitter part 52, a receiver part 53, a receiving antenna 54, and a transmitting antenna 55. The control part 51 of the authentication control unit 50 is connected to the transmitter part 52 and the receiver part 53. The receiver part 53 receives a signal from the outside of the authentication control unit 50 via the receiving antenna 54. The transmitter part 52 transmits a signal to the outside of the authentication control unit 50 via the transmitting antenna 55. The transmitting antenna 55 is, for example, a bar antenna. The transmitting antenna 55 is, for example, a magnetic bar having a winding wound therearound. The transmitting antenna 55 does not necessarily include a winding. For example, the transmitting antenna 55 may be configured as a substrate having a pattern formed thereon.

The control part 51 of the authentication control unit 50 is connected to the operation unit 60. The control part 51 of the authentication control unit 50 is connected to the power unit control unit 30. Each of the power unit control unit 30 and the control part 51 of the authentication control unit 50 includes an arithmetic unit and a storage device (not shown). Each of the power unit control unit 30 and the authentication control unit 50 implements functions by the arithmetic unit executing programs stored in the storage device. The control part 51, the transmitter part 52, and the receiver part 53 of the authentication control unit 50 may be configured as a single electronic device or as separate electronic devices.

The portable device 40 includes a portable device transmitter part 41, a portable device receiver part 42, and a data storage part 43. The portable device transmitter part 41 and the portable device receiver part 42 include antennas (not shown).

The authentication control unit 50 communicates with the portable device 40, to perform the authentication to use the straddled vehicle 10 based on a signal received from the portable device 40. More specifically, the control part 51 of the authentication control unit 50 causes the transmitter part 52 to transmit the request signal in accordance with an operation applied to the operation unit 60. The transmitter part 52 transmits the request signal via the transmitting antenna 55. In response to the portable device receiver part 42 receiving the request signal transmitted from the authentication control unit 50, the portable device 40 directs the portable device transmitter part 41 to transmit a response signal based on a code stored in the data storage part 43. The receiver part 53 of the authentication control unit 50 receives the response signal via the receiving antenna 54. The control part 51 of the authentication control unit 50 performs the authentication to use the straddled vehicle 10 based on the received response signal. The control part 51 of the authentication control unit 50 performs the authentication by checking the code of the received response signal against a code pre-stored in the control part 51.

Upon verification of the authentication, the control part 51 of the authentication control unit 50 permits the use of the straddled vehicle 10, for example. The control part 51 of the authentication control unit 50 permits the sub operation parts 81, 82 (see Fig. 2) of the operation unit 60 to be operated, for example. Since operations to the sub operation parts 81, 82 are permitted, the lid lock 28a and the seat lock 23a can be unlocked by appropriate operations. This allows the fuel lid 28 and the seat 23 to be opened. Upon verification of the authentication, the control part 51 of the authentication control unit 50 can enable the power unit control unit 30 to control the power unit 22. The unauthorized access prevention unit 70 is connected to the control part 51. The unauthorized access prevention unit 70 receives a command signal transmitted from the control part 51, and outputs the buzzer sound.

Fig. 4 is a state transition diagram illustrating the states of the straddled-vehicle authentication system C according to the first embodiment. The state of the straddled-vehicle authentication system C is switchable from the OFF state Q2 through the authentication verified state Q3 to the power-unit ON state Q4. The state of the straddled-vehicle authentication system C is also switchable from the OFF state Q2 to the handlebar locked state Q1.

### <OFF State Q2>

The OFF state Q2 is a state in which the power source of the power unit control unit 30 is off and no authentication is performed by the authentication control unit 50. In the state Q2, the main operation part 61 indicates an OFF position (see Fig. 2). In the state Q2, operations to the sub operation parts 81, 82 are not permitted. In the state Q2, an access to the straddled vehicle 10 via the seat 23 or the fuel lid 28 is not permitted. In the state Q2, an operation for releasing the seat lock 23a or the lid lock 28a is not permitted. In the state Q2, starting the engine 221 is not permitted. In the state Q2, the straddled vehicle 10 is not able to travel. In the state Q2, any equipment for operating the engine 221 is powered off.

In the state Q2, a pressing operation applied to the main operation part 61 causes the authentication control unit 50 to perform authentication by communicating with the portable device 40. The authentication will be successful if the portable device 40 is in the communication range A. The authentication will fail if the portable device 40 is out of the communication range A. The main operation part 61 is configured to accept a rotation operation rotating the main operation part 61 from the OFF position to an OPEN position in a state where the authentication has been successful. As a result of the rotation operation, the state of the authentication system C is switched from the state Q2 to the state Q3. After the authentication was successful, the success of the authentication is cancelled if the rotation operation rotating the main operation part 61 from the OFF position to the OPEN position is not applied before the lapse of a predetermined time period. The main operation part 61 is configured not to accept the rotation operation rotating the main operation part 61 from the OFF position to the OPEN position in a state where the authentication has not been successful. Whether or not the main operation part 61 accepts the rotation operation is controlled by, for example, an actuator (not shown) such as a solenoid configured to switch the main operation part 61 between a rotatable state and a rotation-blocked state.

A rotation operation rotating the main operation part 61 from the OFF position to a LOCK position applied to the main operation part 61 in the state Q2 causes the state of the authentication system C to be switched from the state Q2 to the state Q1. In this embodiment, a successful authentication is not required for switching the state of the authentication system C from the state Q2 to the state Q1. The present invention, however, is not limited to this example. It may be desired that the switching of the state of the authentication system C from the state Q2 to the state Q1 is permitted on the condition that authentication has been successful in the state Q2.

### <Authentication Verified State Q3>

The authentication verified state Q3 is a state in which the power source of the power unit control unit 30 is off and the authentication via a communication between the authentication control unit 50 and the portable device 40 has been performed. In the state Q3, the main operation part 61 indicates the OPEN position (see Fig. 2). In the state Q3, operations to the sub operation parts 81, 82 are permitted. In the state Q3, an access to the straddled vehicle 10 via the seat 23 or the fuel lid 28 is permitted. In the state Q3, an operation for releasing the seat lock 23a or the lid lock 28a is permitted. In the state Q3, starting the engine 221 is not permitted. In the state Q3, the straddled vehicle 10 is not able to travel. In the state Q3, any equipment (e.g., the fuel pump) for operating the engine 221 is powered off.

A rotation operation rotating the main operation part 61 from the OPEN position to an ON position applied to the main operation part 61 in the state Q3 causes the state of the authentication system C to be switched from the state Q3 to the state Q4. In this embodiment, a successful further authentication is not required for switching the state of the authentication system C from the state Q3 to the state Q4. The present invention, however, is not limited to this example. It may be desired that the switching of the state of the authentication system C from the state Q3 to the state Q4 is permitted on the condition that a further authentication has been successful in the state Q3.

A rotation operation rotating the main operation part 61 from the OPEN position to the OFF position applied to the main operation part 61 in the state Q3 causes the state of the authentication system C to be switched from the state Q3 to the state Q2. In this embodiment, a successful further authentication is not required for switching the state of the authentication system C from the state Q3 to the state Q2. The present invention, however, is not limited to this example. It may be desired that the switching of the state of the authentication system C from the state Q3 to the state Q2 is permitted on the condition that a further authentication has been successful in the state Q3.

### <Power-unit ON State Q4>

The power-unit ON state Q4 is a state in which the power source of the power unit control unit 30 is on and the authentication via a communication between the authentication control unit 50 and the portable device 40 has been performed. In the state Q4, the main operation part 61 indicates the ON position (see Fig. 2). In the state Q4, operations to the sub operation parts 81, 82 are not permitted. In the state Q4, an access to the straddled vehicle 10 via the seat 23 or the fuel lid 28 is not permitted. In the state Q4, an operation for releasing the seat lock 23a or the lid lock 28a is not permitted. In the state Q4, any equipment (e.g., the fuel pump) for operating the engine 221 is powered on.

In the state Q4, the power unit control unit 30 is authenticated. For authenticating the power unit control unit 30, an authentication is performed between the portable device 40 and the authentication control unit 50 and an additional authentication is performed between the authentication control unit 50 and the power unit control unit 30. These authentications are implemented by, for example, checking data. In this manner, whether or not the power unit 22 is controlled by the qualified power unit control unit 30 is determined. Upon operation of the start switch 26 in a state where the power unit control unit 30 is successfully authenticated, the power unit control unit 30 starts the engine 221. As a result, the state of the authentication system C transitions from the state Q4 to the state Q5.

### <Engine Operable State Q5>

The engine operable state Q5 is a state included in the power-unit ON state Q4, in which the engine 221 is in operation. In the engine operable state Q5 as well as the power-unit ON state Q4, the main operation part 61 indicates the ON position (see Fig. 2). In the state Q5, operations to the sub operation parts 81, 82 are not permitted. In the state Q5, an access to the straddled vehicle 10 via the seat 23 or the fuel lid 28 is not permitted. In the state Q5, an operation for releasing the seat lock 23a or the lid lock 28a is not permitted. In the state Q5, the straddled vehicle 10 is able to travel. In the state Q5, any equipment (e.g., the fuel pump) for operating the engine 221 is in operation.

A rotation operation rotating the main operation part 61 from the ON position to the OPEN position applied to the main operation part 61 in the state Q4 or in the state Q5 causes the state of the authentication system C to return to the state Q3. In this embodiment, the authentication of the power unit control unit 30 in the state Q4 is omitted if the rotation operation rotating the main operation part 61 from the OPEN position to the ON position is applied to the main operation part 61 before elapse of a predetermined retention time since the state of the authentication system C returned from the state Q4 or Q5 to the state Q3. For example, even if the user who lost the portable device 40 when the state of the authentication system C is in the state Q4 or Q5 once switches the state of the authentication system C from the state Q4 or Q5 to the authentication verified state Q3, the user is able to put the power unit 22 in operation so long as the user switches the state of the authentication system C from the state Q3 back to the state Q4 within the retention time.

### <Handlebar Locked State Q1>

The handlebar locked state Q1 is a state included in the OFF state Q2, in which the handlebars 17 are locked. In the handlebar locked state Q1 as well as the OFF state Q2, the main operation part 61 indicates the OFF position (see Fig. 2). In the state Q1, the handlebars 17 are blocked against rotation by a handlebar locking mechanism (not shown) provided in the straddled vehicle 10.

A pressing operation applied to the main operation part 61 in the state Q1 causes the authentication control unit 50 to perform the authentication by communicating with the portable device 40. The main operation part 61 is configured to accept a rotation operation rotating the main operation part 61 from the LOCK position to the OFF position in a state where the authentication has been successful. The rotation operation causes the state of the authentication system C to be switched from the state Q1 to the state Q2. The state transition shown in Fig. 4 is one example of the state transition of the present invention. The authentication system may be configured such that the state of the authentication system is switched from the state Q2 to the state Q4 without interposition of the state Q3. The authentication system may be configured such that the state of the authentication system is switched from the state Q2 to at least either of the state Q3 and the state Q4. In such a case as well, the authentication is performed when the state of the authentication system is switched to the state Q3, and in response to a successful authentication, the state of the authentication system is switched to the state Q3.

Fig. 5 is a flowchart of an unauthorized access prevention process that is performed in the straddled-vehicle authentication system C according to the first embodiment, when a main operation part of the operation unit is in the OPEN position. The unauthorized access prevention process for OPEN position is a process performed when the main operation part 61 is displaced into the OPEN position. Fig. 6 is a timing chart of the unauthorized access prevention process that is performed in the straddled-vehicle authentication system C according to the first embodiment, when a main operation part of the operation unit is in the OPEN position.

In step S10, the authentication control unit 50 starts monitoring the OPEN position. The control part 51 of the authentication control unit 50 is configured to store position information of the main operation part 61 into the storage device of the control part 51. The position information of the main operation part 61 is updated each time the position indicated by the main operation part 61 is changed. In step S10, data representing the "OPEN" position is stored as the position information of the main operation part 61. The position of the main operation part 61 is monitored as such.

In step S11, the authentication control unit 50 starts counting a timer t. The authentication control unit 50 includes the timer t. To be exact, the timer t is built in the control part 51. The timer t indicates a time elapsed since the main operation part 61 was displaced into the OPEN position. Additionally, in step S11, the value of k is set as 1. The value of k will be described below.

In step S12, the authentication control unit 50 determines whether or not the timer t is less than the value of Σ[k=1,n]Pk (sec). The value of Pk represents a time period that is preset for each number of times the authentication has been performed. The value of k represents the number of times the authentication has been performed. The default value of k is one. The value of n represents the number of times the authentication has been performed at the time point of execution of step S12. The value of Pk decreases as the number of times the authentication has been performed increases. For example, the value of Pk is set such that P1=5.00, P2=4.96, and P3=4.92. Immediately after the authentication system C transitions to the state Q3, it is highly likely that the user remembers that the authentication system C is in the state Q3. As the elapsed time t in the state Q3 increases, it becomes less likely that the user remembers that the authentication system C is in the state Q3. Therefore, setting an interval of the authentication such that the interval decreases as the number of times the authentication has been performed increases leads to more effectively maintaining security as well as to less power consumption. When the number of times the authentication has been performed is two, the value of Σ[k=1,2]Pk is P1+P2. When the number of times the authentication has been performed is three, the value of Σ[k=1,3]Pk is P1+P2+P3. If the timer t is less than the value of E[k=1,n]Pk (step S12: YES), the processing moves to step S16. If the timer t is not less than the value of Σ[k=1,n]Pk (step S12: NO), the processing moves to step S13.

In step S13, the authentication control unit 50 performs the authentication by communicating with the portable device 40. A description of the authentication is omitted here because it has been already described above. When the portable device 40 is in the communication range A of the authentication control unit 50, the authentication control unit 50 succeeds in the authentication with the portable device 40. When the portable device 40 is out of the communication range A of the authentication control unit 50, the authentication control unit 50 the authentication with the portable device 40 fails. The value of k is incremented by one after the authentication is performed in step S13.

In step S14, the authentication control unit 50 determines whether or not the authentication is successful (step S14). If the authentication is successful (step S14: YES), the processing moves to step S16. If the authentication failed (step S14: NO), the processing moves to step S15.

In step S15, the authentication control unit 50 outputs a command signal to the unauthorized access prevention unit 70. The unauthorized access prevention unit 70 outputs a buzzer sound based on the command signal. The buzzer sound is, for example, intermittently outputted as shown in Fig. 6. A pattern of the buzzer sound is not particularly limited. The buzzer sound is outputted until the portable device 40 returns to the communication range A to make authentication successful.

In step S16, the authentication control unit 50 determines whether or not the timer t is less than T1 (sec). T1 is longer than PI. No particular limitation is put on T1 except that it should be longer than PI. If the timer t is less than T1 (step S16: YES), the processing returns to step S12. If the timer t is not less than T1 (step S16: NO), the processing moves to step S17.

In step S17, the authentication control unit 50 outputs a command signal to the unauthorized access prevention unit 70. The unauthorized access prevention unit 70 outputs a buzzer sound for a predetermined duration based on the command signal. In this embodiment, if the elapsed time t in the authentication verified state Q3 becomes equal to or more than T1, the unauthorized access prevention unit 70 outputs the buzzer sound independently of the authentication status. A situation where the straddled vehicle 10 is left in the authentication verified state Q3 for a long time is not preferable from the viewpoint of security. This is why the buzzer sound is outputted irrespective of whether or not the portable device 40 is in the communication range A. Even when the user is near the straddled vehicle 10, the user is informed that the state of the authentication system C is the authentication verified state Q3.

In step S18, the authentication control unit 50 determines whether or not the timer t is less than T2. T2 is longer than T1. No particular limitation is put on T2 except that it should be longer than T1. If the timer t is less than T2 (step S18: YES), the processing returns to step S17. If the timer t is not less than T2 (step S18: NO), the unauthorized access prevention process is terminated. If the elapsed time t in the authentication verified state Q3 becomes equal to or more than T2, the output of the buzzer sound stops. Power consumption is saved. If the main operation part 61 is operated during execution of the process shown in Fig. 5, the process is terminated, and the monitoring of the OPEN position and the counting of the timer t are deactivated.

As thus far described, the authentication system C of the first embodiment includes the authentication verified state Q3. Power consumption in the state Q3 is less than power consumption in the power-unit ON state Q4. The authentication verified state Q3 enables the user to take actions on the straddled vehicle 10 while saving power consumption. In the authentication verified state Q3, furthermore, the authentication control unit 50 repeatedly performs authentication independently of operations made to the main operation part 61. If the authentication failed, the unauthorized access prevention unit 70 outputs the buzzer sound. The output of the buzzer sound is repeated until the authentication is successfully performed. That is, the buzzer sound is outputted under limited circumstances in which the user is leaving the straddled vehicle 10. This results in less power consumption while maintaining security. In the state Q3, the main operation part 61 indicates the "OPEN" position. Displaying that the authentication system C is in the state Q3 is implemented by the physical displacement of the main operation part 61. The user who hears the buzzer sound looks at the main operation part 61, and thus recognizes that the authentication system C is in the state Q3. Making the user recognize that the authentication system C is in the state Q3 is effectively enabled with less power consumption.

### <Second Embodiment>

Fig. 7 is a flowchart of an unauthorized access prevention process that is performed in a straddled-vehicle authentication system C according to a second embodiment, when a main operation part of the operation unit is in the OPEN position. Fig. 8 is a timing chart of the unauthorized access prevention process that is performed in the straddled-vehicle authentication system C according to the second embodiment, when a main operation part of the operation unit is in the OPEN position.

Steps S10 to S11 are the same as those of the first embodiment. In step S12, the authentication control unit 50 determines whether or not the timer t is less than the value of [G×n+H×(n-1)] (sec). The value of n represents the number of times the authentication has been performed. The value of G represents the length of a non-informing period (buzzer is off), and it is for example five seconds. The value of H represents the length of an informing period (buzzer is on), and it is for example three seconds. In the second embodiment, therefore, a buzzer sound is outputted for three seconds, and the output is repeated at intervals of five seconds. If the timer t is less than the value of [G×n+H×(n-1)] (step S12: YES), the processing moves to step S20. If the timer t is not less than the value of [G×n+H×(n-1)] (step S12: NO), the processing moves to step S15.

In step S15, the authentication control unit 50 outputs a command signal to the unauthorized access prevention unit 70. The unauthorized access prevention unit 70 intermittently outputs the buzzer sound during the informing period H based on the command signal, as shown in Fig. 8 for example. A pattern of the buzzer sound is not particularly limited except that it should be an intermittent pattern. In the second embodiment, in the state Q3 no authentication is performed in response to a user's operation of the main operation part 61. The buzzer sound is intermittently outputted independently of the authentication status in the state Q3. In the state Q3, as shown in Fig. 8, the unauthorized access prevention unit 70 outputs the buzzer sound such that a period during which the buzzer sound is outputted is shorter than a period during which the buzzer sound is not outputted. Power consumption is more effectively saved.

In step S20, the authentication control unit 50 determines whether or not the timer t is less than TM (sec). TM is longer than G+H (sec). TM is for example 180 seconds. If the timer t is less than TM (step S20: YES), the processing returns to step S12. If the timer t is not less than TM (step S20: NO), the unauthorized access prevention process is terminated. If the main operation part 61 is operated during execution of the process shown in Fig. 7, the process is terminated, and the monitoring of the OPEN position and the counting of the timer t are deactivated.

As thus far described, the authentication system C of the second embodiment is configured such that the authentication control unit 50 performs authentication when the state of the authentication system C is transitioning to the state Q3 while no authentication is performed in the state Q3. The unauthorized access prevention unit 70 intermittently outputs the buzzer sound in accordance with the elapsed time and independently of the authentication status in the state Q3. That is, the buzzer sound is outputted for a limited time period. This results in less power consumption while maintaining security. In the state Q3, the main operation part 61 indicates the "OPEN" position. Displaying that the authentication system C is in the state Q3 is implemented by the physical displacement of the main operation part 61. The user who hears the buzzer sound looks at the main operation part 61, and thus recognizes that the authentication system C is in the state Q3. Making the user recognize that the authentication system C is in the state Q3 is effectively enabled with less power consumption.

In the first and second embodiments, the unauthorized access prevention unit 70 is an electronic buzzer configured to output the buzzer sound. The electronic buzzer of the first and second embodiments outputs the buzzer sound mainly for the purpose of prompting the user not to leave the straddled vehicle 10. In the present invention, however, the unauthorized access prevention unit is not limited to this example. The unauthorized access prevention unit may be, for example, an informing unit or an access blocking unit. The informing unit is configured to perform a process for presenting visual or auditory information to the user. Non-limiting examples of a visual informing unit include a light source and an electronic display device. Non-limiting examples of the electronic display device include a liquid crystal display device, a 7-segment display, and a dot matrix display. Non-limiting examples of an auditory informing unit include a sound output device. The electronic buzzer is one example of the informing unit. The buzzer sound is one example of an informing sound for the auditory information.

Preferably, the informing unit presents information for prompting the user not to leave the straddled vehicle 10, as illustrated in the first and second embodiments. The present invention, however, is not limited to this example. It may be conceivable that the informing unit presents information for making the user recognize that the straddled vehicle 10 is in the authentication verified state Q3. It may be conceivable that the informing unit presents information for making the user recognize that the open/close part is accessible in the state Q3. These types of information are also able to prompt the user not to leave the straddled vehicle 10, to eliminate or reduce the risk of a third party's unauthorized access to the straddled vehicle 10. The informing unit may eliminate or reduce the risk of a third party's unauthorized access to the straddled vehicle 10 by attracting public attention by means of visual or auditory information. The access blocking unit is configured to perform a process for blocking an access to a part of the straddled vehicle 10 that has been made accessible in the state Q3. For example, the access blocking unit locks the lid lock 28a or the seat lock 23a. The access blocking unit may be configured to lock the cover of the glovebox. As can be seen above, the unauthorized access prevention unit is not particularly limited. For example, a device or equipment that performs the following process corresponds to the unauthorized access prevention unit. The process is, for example, a process for eliminating or reducing the risk that the user leaves the straddled vehicle 10. The process is, for example, a process for inhibiting or blocking a third party's access to the straddled vehicle 10. The process is, for example, a process for attracting public attention in order to suppress a third party's access to the straddled vehicle 10.

In the first embodiment, the cycle of performing the authentication in the state Q3 is gradually shortened as the elapsed time increases. In the present invention, the cycle of performing the authentication in the authentication verified state is not particularly limited. The cycle of performing the authentication in the authentication verified state may be constant. The cycle of performing the authentication in the authentication verified state may be gradually prolonged as the elapsed time increases. The cycle of performing the authentication in the authentication verified state may be set in accordance with the field intensity of a signal transmitted from the portable device 40. In such a configuration, the authentication control unit 50 sets the cycle of performing the authentication such that, for example, the cycle is prolonged as the field intensity is higher. In other words, the authentication control unit 50 sets the cycle of performing the authentication such that the cycle is shorter as the field intensity is lower. This results in less power consumption while maintaining security.

In the state Q3 of the second embodiment, no authentication is performed and the process for preventing an unauthorized access is performed by periodically outputting the informing sound. A period during which the informing sound is outputted is constant irrespective of the elapsed time t in the state Q3. A period during which the informing sound is not outputted is constant irrespective of the elapsed time t in the state Q3. For example, the unauthorized access prevention unit may perform an informing process in such a manner that power consumption associated with the informing process per unit time increases as the elapsed time t in the state Q3 increases. For example, the unauthorized access prevention unit may output the informing sound in such a manner that the volume of the sound increases as the elapsed time t in the state Q3 increases. The unauthorized access prevention unit may output the informing sound in such a manner that the value of [period during which informing sound is outputted / (period during which informing sound is outputted + period during which informing sound is not outputted)] increases as the elapsed time t in the state Q3 increases. In a case where the unauthorized access prevention unit is a light source, a configuration is conceivable in which, for example, the light source is turned on in such a manner that the light intensity per unit time increases as the elapsed time t in the state Q3 increases. In a case where the unauthorized access prevention unit is a light source, a configuration is conceivable in which, for example, the value of [period during which light is outputted / (period during which light is outputted + period during which light is not outputted)] increases as the elapsed time t in the state Q3 increases. This results in less power consumption while maintaining security.

In the present invention, the unauthorized access prevention unit may perform the process for preventing an unauthorized access in accordance with the authentication status in the authentication verified state, as illustrated in the first embodiment. In the present invention, the unauthorized access prevention unit may perform the process for preventing an unauthorized access in accordance with the elapsed time in the authentication verified state, as illustrated in the second embodiment. In the present invention, furthermore, the unauthorized access prevention unit may perform the process for preventing an unauthorized access in accordance with both the elapsed time in the authentication verified state and the authentication status in the authentication verified state. For example, it is conceivable that the process for preventing an unauthorized access is performed on the condition that the elapsed time in the authentication verified state exceeds a predetermined time period and additionally the authentication performed in the authentication verified state failed.

In a case where the unauthorized access prevention unit performs the process for preventing an unauthorized access in accordance with the authentication status in the authentication verified state, a configuration is conceivable in which, for example, the process for preventing an unauthorized access is performed on the condition that the authentication failed a plurality of times in the authentication verified state. A configuration is also conceivable in which the process for preventing an unauthorized access is performed on the condition that the authentication is consecutively failed a plurality of times.

The first embodiment illustrates the case where the authentication is repeatedly performed in the authentication verified state. The present invention, however, is not limited to this example. In a preferred embodiment of the present invention, the authentication control unit is configured to perform the authentication at least once in the authentication verified state. Here, the authentication performed at the time of switching the state of the authentication system to the authentication verified state does not correspond to the authentication in the authentication verified state.

It is acceptable that the straddled-vehicle authentication system C is configured as follows. The straddled-vehicle authentication system C includes a transmitter part, a receiver part, a code checking part, and a transmission control part. The transmitter part is configured to transmit a request signal to the portable device 40 with a predetermined transmission cycle, in order to detect whether the portable device 40 for authenticating use of the straddled vehicle 10 has fallen. The request signal is for checking whether or not the portable device 40 is within the communication range A of the straddled vehicle 10. The transmitter part is, for example, constituted of the control part 51, the transmitter part 52, and the transmitting antenna 55. The receiver part is configured to receive a response signal transmitted from the portable device 40 that received the request signal. The response signal includes a code for authentication. The receiver part is, for example, constituted of the control part 51, the receiver part 53, and the receiving antenna 54. The code checking part is configured to check the code received by the receiver part. In checking the code for authentication via a communication with the portable device 40, the authentication control unit 50 functions as the code checking part. The transmission control part is configured to change the request signal transmission cycle in accordance with the status of the straddled vehicle 10. In changing the request signal transmission cycle in accordance with the status of the straddled vehicle 10, the authentication control unit 50 functions as the transmission control part.

While the authentication control unit 50 performs the authentication with the portable device 40, the code checking part checks the codes. Therefore, a timing at which the code checking part checks the codes is substantially coincident with a timing at which the authentication control unit 50 performs the authentication with the portable device 40. The timing at which the code checking part checks the codes is not particularly limited except that the timing depends on the status of the straddled vehicle 10. The timing at which the code checking part checks the codes is based on, for example, the vehicle speed, the engine rotational speed, a gear position, an accumulated travel distance, a section travel distance, the degree of opening of a throttle valve, the rotation speed of wheels, position information of the straddled vehicle, a battery voltage, or the like. The accumulated travel distance is the value of an odometer. The section travel distance is the value of a trip meter. The position information is obtained by, for example, a satellite positioning system such as GPS.

While preferred embodiments of the present invention have been described above, it will be obvious that variations and modifications may be made without departing from the scope of the present invention determined solely by the claims as set forth below.

### [DESCRIPTION OF THE REFERENCE SIGNS]

- 10: straddled vehicle
- 11: vehicle body
- 12a, 12b: wheel
- 13: vehicle body frame
- 14: head pipe
- 16: front fork
- 17: handlebars
- 18: front cover
- 19: leg cover
- 21: fuel tank
- 22: power unit
- 221: engine
- 23: seat
- 23a: seat lock
- 24: storage compartment
- 26: start switch
- 27: battery
- 28: fuel lid
- 28a: lid lock
- 30: power unit control unit
- 40: portable device
- 41: portable device transmitter part
- 42: portable device receiver part
- 43: data storage part
- 50: authentication control unit
- 51: control unit
- 52: transmitter part
- 53: receiver part
- 54: receiving antenna
- 55: transmitting antenna
- 60: operation unit
- 61: main operation part
- 70: unauthorized access prevention unit
- 81, 82: sub operation part
- C: straddled-vehicle authentication system

## Claims

1. A straddled-vehicle authentication system (C) comprising:
a power unit control unit (30) configured to control a power unit (22), the power unit control unit (30) provided in a straddled vehicle (10), the power unit (22) provided in the straddled vehicle (10) and configured to drive the straddled vehicle (10);
a portable device (40) configured to be used for an authentication to use the straddled vehicle (10) via a wireless communication, the portable device (40) being physically separate from the straddled vehicle (10);
an authentication control unit (50) configured to perform the authentication to use the straddled vehicle (10) by communicating with the portable device (40), the authentication control unit (50) provided in the straddled vehicle (10);
a main operation part (61) configured to receive an operation for switching the state of the authentication system to at least an OFF state (Q2), an authentication verified state (Q3), and a power-unit ON state (Q4), and to display the state of the authentication system by means of a physical displacement of the main operation part (61) caused by an operation applied to the main operation part (61), wherein
the main operation part (61) is provided in the straddled vehicle (10),
the OFF state (Q2) is a state in which a power source of the power unit control unit (30) is off and the authentication via the wireless communication between the authentication control unit (50) and the portable device (40) is not performed,
the authentication verified state (Q3) is a state in which the power source of the power unit control unit (30) is off and the authentication via the wireless communication between the authentication control unit (50) and the portable device (40) has been performed,
the power-unit ON state (Q4) is a state in which the power source of the power unit control unit (30) is on and the authentication via the wireless communication between the authentication control unit (50) and the portable device (40) has been performed; and
an unauthorized access prevention unit (70) configured to perform a process for preventing an unauthorized access to the straddled vehicle (10) in accordance with at least either one of an elapsed time in the authentication verified state (Q3) and a status of the authentication performed by the authentication control unit (50) in the authentication verified state (Q3).

2. The straddled-vehicle authentication system (C) according to claim 1, wherein
the authentication control unit (50) is configured to perform the authentication by communicating with the portable device (40) independently of an operation applied to the main operation part (61) in the authentication verified state (Q3),
the unauthorized access prevention unit (70) is configured to perform the process for preventing an unauthorized access to the straddled vehicle (10) in accordance with at least the status of the authentication performed by the authentication control unit (50) in the authentication verified state (Q3).

3. The straddled-vehicle authentication system (C) according to claim 1 or 2, wherein
the authentication control unit (50) is configured to repeatedly perform the authentication by communicating with the portable device (40) in the authentication verified state (Q3),
the unauthorized access prevention unit (70) is configured to perform the process for preventing an unauthorized access to the straddled vehicle (10) in accordance with at least the status of the authentication performed by the authentication control unit (50) in the authentication verified state (Q3).

4. The straddled-vehicle authentication system (C) according to claim 1, wherein
the unauthorized access prevention unit (70) is configured to perform the process for preventing an unauthorized access to the straddled vehicle (10) in accordance with the elapsed time in the authentication verified state (Q3) and independently of the status of the authentication.

5. The straddled-vehicle authentication system (C) according to claim 4, wherein
the authentication control unit (50) is configured not to perform the authentication in the authentication verified state (Q3) when the main operation part (61) is not operated.

6. The straddled-vehicle authentication system (C) according to any one of claims 1 to 5, wherein
the unauthorized access prevention unit (70) is configured to perform a process for presenting visual or auditory information, as the process for preventing an unauthorized access to the straddled vehicle (10).

7. The straddled-vehicle authentication system (C) according to any one of claims 1 to 5, wherein
the unauthorized access prevention unit (70) is configured to perform a process for blocking an access to a part of the straddled vehicle (10) that has been made accessible after the authentication, as the process for preventing an unauthorized access to the straddled vehicle (10).

8. The straddled-vehicle authentication system (C) according to claim 7, wherein
a part of the straddled vehicle (10) is an open/close part provided in the straddled vehicle (10),
the open/close part is configured to allow the straddled vehicle (10) to be accessed through the open/close part when the open/close part is opened, the open/close part being openable in the authentication verified state (Q3) and not openable in the OFF state (Q2) and in the power-unit ON state (Q4).

9. A straddled vehicle (10) comprising:
a power unit (22) that drives the straddled vehicle (10); and
the straddled-vehicle authentication system (C) according to any one of claims 1 to 8.

## Patentansprüche

1. Ein Authentifizierungssystem für ein rittlings zu fahrendes Fahrzeug (C), das folgende Merkmale aufweist:
eine Antriebseinheits-Steuereinheit (30), die konfiguriert ist, eine Antriebseinheit (22) zu steuern, wobei die Antriebseinheits-Steuereinheit (30) in einem rittlings zu fahrenden Fahrzeug (10) bereitgestellt ist, wobei die Antriebseinheit (22) in dem rittlings zu fahrenden Fahrzeug (10) bereitgestellt ist und konfiguriert ist, das rittlings zu fahrende Fahrzeug (10) anzutreiben;
eine tragbare Vorrichtung (40), die konfiguriert ist, für eine Authentifizierung für die Verwendung des rittlings zu fahrenden Fahrzeugs (10) über eine drahtlose Kommunikation verwendet zu werden, wobei die tragbare Vorrichtung (40) von dem rittlings zu fahrenden Fahrzeug (10) physisch getrennt ist;
eine Authentifizierungs-Steuereinheit (50), die konfiguriert ist, die Authentifizierung für die Verwendung des rittlings zu fahrenden Fahrzeugs (10) durch Kommunizieren mit der tragbaren Vorrichtung (40) durchzuführen, wobei die Authentifizierungs-Steuereinheit (50) in dem rittlings zu fahrenden Fahrzeug (10) bereitgestellt ist;
einen Haupt-Betätigungsteil (61), der konfiguriert ist, einen Vorgang zum Umschalten des Zustands des Authentifizierungssystems zu zumindest einem AUS-Zustand (Q2), einem Authentifizierung-überprüft-Zustand (Q3) und einem Antriebseinheit-EIN-Zustand (Q4) zu empfangen und den Zustand des Authentifizierungssystems mittels einer physischen Verschiebung des Haupt-Betätigungsteils (61) anzuzeigen, die durch einen auf den Haupt-Betätigungsteil (61) angewendeten Vorgang verursacht wird, wobei
der Haupt-Betätigungsteil (61) in dem rittlings zu fahrenden Fahrzeug (10) bereitgestellt ist,
der AUS-Zustand (Q2) ein Zustand ist, in dem eine Energiequelle der Antriebseinheits-Steuereinheit (30) ausgeschaltet ist und die Authentifizierung über die drahtlose Kommunikation zwischen der Authentifizierungs-Steuereinheit (50) und der tragbaren Vorrichtung (40) nicht durchgeführt wird,
der Authentifizierung-überprüft-Zustand (Q3) ein Zustand ist, in dem die Energiequelle der Antriebseinheits-Steuereinheit (30) ausgeschaltet ist und die Authentifizierung über die drahtlose Kommunikation zwischen der Authentifizierungs-Steuereinheit (50) und der tragbaren Vorrichtung (40) durchgeführt worden ist,
der Antriebseinheit-EIN-Zustand (Q4) ein Zustand ist, in dem die Energiequelle der Antriebseinheits-Steuereinheit (30) eingeschaltet ist und die Authentifizierung über die drahtlose Kommunikation zwischen der Authentifizierungs-Steuereinheit (50) und der tragbaren Vorrichtung (40) durchgeführt worden ist; und
eine Einheit zur Verhinderung von unbefugtem Zugriff (70), die konfiguriert ist, einen Prozess zum Verhindern eines unbefugten Zugriffs auf das rittlings zu fahrende Fahrzeug (10) gemäß zumindest entweder einer verstrichenen Zeit in dem Authentifizierung-überprüft-Zustand (Q3) oder einem Status der Authentifizierung durchzuführen, die durch die Authentifizierungs-Steuereinheit (50) in dem Authentifizierung-überprüft-Zustand (Q3) durchgeführt wird.

2. Das Authentifizierungssystem für ein rittlings zu fahrendes Fahrzeug (C) gemäß Anspruch 1, bei dem
die Authentifizierungs-Steuereinheit (50) konfiguriert ist, die Authentifizierung durch Kommunizieren mit der tragbaren Vorrichtung (40) unabhängig von einem Vorgang durchzuführen, der auf den Haupt-Betätigungsteil (61) in dem Authentifizierung-überprüft-Zustand (Q3) angewendet wird,
die Einheit zur Verhinderung von unbefugtem Zugriff (70) konfiguriert ist, den Prozess zum Verhindern eines unbefugten Zugriffs auf das rittlings zu fahrende Fahrzeug (10) gemäß zumindest dem Status der Authentifizierung durchzuführen, die durch die Authentifizierungs-Steuereinheit (50) in dem Authentifizierung-überprüft-Zustand (Q3) durchgeführt wird.

3. Das Authentifizierungssystem für ein rittlings zu fahrendes Fahrzeug (C) gemäß Anspruch 1 oder 2, bei dem
die Authentifizierungs-Steuereinheit (50) konfiguriert ist, die Authentifizierung durch Kommunizieren mit der tragbaren Vorrichtung (40) in dem Authentifizierung-überprüft-Zustand (Q3) wiederholt durchzuführen,
die Einheit zur Verhinderung von unbefugtem Zugriff (70) konfiguriert ist, den Prozess zum Verhindern eines unbefugten Zugriffs auf das rittlings zu fahrende Fahrzeug (10) gemäß zumindest dem Status der Authentifizierung durchzuführen, die durch die Authentifizierungs-Steuereinheit (50) in dem Authentifizierung-überprüft-Zustand (Q3) durchgeführt wird.

4. Das Authentifizierungssystem für ein rittlings zu fahrendes Fahrzeug (C) gemäß Anspruch 1, bei dem
die Einheit zur Verhinderung von unbefugtem Zugriff (70) konfiguriert ist, den Prozess zum Verhindern eines unbefugten Zugriffs auf das rittlings zu fahrende Fahrzeug (10) gemäß der verstrichenen Zeit in dem Authentifizierung-überprüft-Zustand (Q3) und unabhängig von dem Status der Authentifizierung durchzuführen.

5. Das Authentifizierungssystem für ein rittlings zu fahrendes Fahrzeug (C) gemäß Anspruch 4, bei dem
die Authentifizierungs-Steuereinheit (50) konfiguriert ist, die Authentifizierung in dem Authentifizierung-überprüft-Zustand (Q3) nicht durchzuführen, wenn der Haupt-Betätigungsteil (61) nicht betätigt wird.

6. Das Authentifizierungssystem für ein rittlings zu fahrendes Fahrzeug (C) gemäß einem der Ansprüche 1 bis 5, bei dem
die Einheit zur Verhinderung von unbefugtem Zugriff (70) konfiguriert ist, einen Prozess zum Präsentieren visueller oder akustischer Informationen als Prozess zum Verhindern eines unbefugten Zugriffs auf das rittlings zu fahrende Fahrzeug (10) durchzuführen.

7. Das Authentifizierungssystem für ein rittlings zu fahrendes Fahrzeug (C) gemäß einem der Ansprüche 1 bis 5, bei dem
die Einheit zur Verhinderung von unbefugtem Zugriff (70) konfiguriert ist, einen Prozess zum Blockieren eines Zugriffs auf einen Teil des rittlings zu fahrenden Fahrzeugs (10), der nach der Authentifizierung zugänglich gemacht wurde, als Prozess zum Verhindern eines unbefugten Zugriffs auf das rittlings zu fahrende Fahrzeug (10) durchzuführen.

8. Das Authentifizierungssystem für ein rittlings zu fahrendes Fahrzeug (C) gemäß Anspruch 7, bei dem
ein Teil des rittlings zu fahrenden Fahrzeugs (10) ein Öffnen/Schließen-Teil ist, der in dem rittlings zu fahrenden Fahrzeug (10) bereitgestellt ist,
der Öffnen/Schließen-Teil konfiguriert ist, den Zugriff auf das rittlings zu fahrende Fahrzeug (10) durch den Öffnen/Schließen-Teil zu ermöglichen, wenn der Öffnen/Schließen-Teil geöffnet ist, wobei der Öffnen/Schließen-Teil in dem Authentifizierung-überprüft-Zustand (Q3) geöffnet werden kann und in dem AUS-Zustand (Q2) und in dem Antriebseinheit-EIN-Zustand (Q4) nicht geöffnet werden kann.

9. Ein rittlings zu fahrendes Fahrzeug (10), das folgende Merkmale aufweist:
eine Antriebseinheit (22), die das rittlings zu fahrende Fahrzeug(10) antreibt; und
das Authentifizierungssystem für ein rittlings zu fahrendes Fahrzeug (C) gemäß einem der Ansprüche 1 bis 8.

## Revendications

1. Système d'authentification de véhicule à selle (C), comprenant:
une unité de commande d'unité motrice (30) configurée pour commander une unité motrice (22), l'unité de commande d'unité motrice (30) étant prévue dans un véhicule à selle (10), l'unité motrice (22) étant prévue dans le véhicule à selle (10) et configurée pour entraîner le véhicule à selle (10);
un dispositif portable (40) configuré pour être utilisé pour une authentification pour l'utilisation du véhicule à selle (10) via une communication sans fil, le dispositif portable (40) étant séparé physiquement du véhicule à selle (10);
une unité de commande d'authentification (50) configurée pour effectuer l'authentification pour l'utilisation du véhicule à selle (10) en communiquant avec le dispositif portable (40), l'unité de commande d'authentification (50) étant prévue dans le véhicule à selle (10);
une partie d'actionnement principale (61) configurée pour recevoir une action de commutation de l'état du système d'authentification à au moins un état de désactivation (Q2), un état d'authentification vérifiée (Q3) et un état d'activation de l'unité motrice (Q4), et pour afficher l'état du système d'authentification au moyen d'un déplacement physique de la partie d'actionnement principale (61) provoqué par un action appliquée à la partie d'actionnement principale (61),
dans lequel
la partie d'actionnement principale (61) est prévue dans le véhicule à selle (10),
l'état de désactivation (Q2) est un état dans lequel une source d'énergie de l'unité de commande d'unité motrice (30) est désactivée et l'authentification via la communication sans fil entre l'unité de commande d'authentification (50) et le dispositif portable (40) n'est pas effectuée,
l'état d'authentification vérifiée (Q3) est un état dans lequel la source d'énergie de l'unité de commande d'unité motrice (30) est désactivée et l'authentification via la communication sans fil entre l'unité de commande d'authentification (50) et le dispositif portable (40) a été effectuée,
l'état d'activation de l'unité motrice (Q4) est un état dans lequel la source d'énergie de l'unité de commande d'unité motrice (30) est activée et l'authentification via la communication sans fil entre l'unité de commande d'authentification (50) et le dispositif portable (40) a été effectuée; et
une unité de prévention d'accès non autorisé (70) configurée pour exécuter un processus pour empêcher un accès non autorisé au véhicule à selle (10) selon au moins l'un parmi un temps écoulé à l'état d'authentification vérifiée (Q3) et un état d'authentification effectuée par l'unité de commande d'authentification (50) à l'état d'authentification vérifiée (Q3).

2. Système d'authentification de véhicule à selle (C) selon la revendication 1, dans lequel
l'unité de commande d'authentification (50) est configurée pour effectuer l'authentification en communiquant avec le dispositif portable (40) indépendamment d'une action appliquée à la partie d'actionnement principale (61) à l'état d'authentification vérifiée (Q3),
l'unité de prévention d'accès non autorisé (70) est configurée pour effectuer un processus pour empêcher un accès non autorisé au véhicule à selle (10) selon au moins l'état de l'authentification effectuée par l'unité de commmande d'authentification (50) à l'état d'authentification vérifiée (Q3).

3. Système d'authentification de véhicule à selle (C) selon la revendication 1 ou 2, dans lequel
l'unité de commande d'authentification (50) est configurée pour effectuer de manière répétée l'authentification en communiquant avec le dispositif portable (40) à l'état d'authentification vérifiée (Q3),
l'unité de prévention d'accès non autorisé (70) est configurée pour effectuer le processus pour empêcher un accès non autorisé au véhicule à selle (10) selon au moins l'état de l'authentification effectuée par l'unité de commande d'authentification (50) à l'état d'authentification vérifiée (Q3).

4. Système d'authentification de véhicule à selle (C) selon la revendication 1, dans lequel
l'unité de prévention d'accès non autorisé (70) est configurée pour effectuer le processus pour empêcher un accès non autorisé au véhicule à selle (10) selon le temps écoulé à l'état d'authentification vérifiée (Q3) et indépendamment de l'état de l'authentification.

5. Système d'authentification de véhicule à selle (C) selon la revendication 4, dans lequel
l'unité de commande d'authentification (50) est configurée pour ne pas effectuer l'authentification à l'état d'authentification vérifiée (Q3) lorsque la partie d'actionnement principale (61) n'est pas utilisée.

6. Système d'authentification de véhicule à selle (C) selon l'une quelconque des revendications 1 à 5, dans lequel
l'unité de prévention d'accès non autorisé (70) est configurée pour effectuer un processus pour présenter des informations visuelles ou auditives, comme processus pour empêcher un accès non autorisé au véhicule à selle (10).

7. Système d'authentification de véhicule à selle (C) selon l'une quelconque des revendications 1 à 5, dans lequel
l'unité de prévention d'accès non autorisé (70) est configurée pour effectuer un processus pour bloquer un accès à une partie du véhicule à selle (10) qui a été rendue accessible après l'authentification, comme processus pour empêcher un accès non autorisé au véhicule à selle (10).

8. Système d'authentification de véhicule à selle (C) selon la revendication 7, dans lequel
une partie du véhicule à selle (10) est une partie d'ouverture/fermeture prévue dans le véhicule à selle (10),
la partie d'ouverture/fermeture est configurée pour permettre l'accès au véhicule à selle (10) à travers la partie d'ouverture/fermeture lorsque la partie d'ouverture/fermeture est ouverte, la partie d'ouverture/fermeture pouvant être ouverte à l'état d'authentification vérifiée (Q3) et ne pouvant pas être ouverte à l'état désactivé (Q2) et à l'état activé de l'unité motrice (Q4).

9. Véhicule à selle (10), comprenant:
une unité motrice (22) qui entraîne le véhicule à selle (10); et
le système d'authentification de véhicule à selle (C) selon l'une quelconque des revendications 1 à 8.
